# EUROPÄISCHE PATENTSCHRIFT

(11) **EP 1 680 993 B1**
(45) Veröffentlichungstag und Bekanntmachung des Hinweises auf die Patenterteilung: **03.10.2007**
(21) Anmeldenummer: 04293008.1
(22) Anmeldetag: 15.12.2004
(51) Int. Cl.: A47J 27/08

(54) **Tiegel und Verfahren zum Betreiben eines Tiegels**
Saucepan and procedure for the use of a saucepan
Poêlon et procédure d'utilisation d'un poêlon

(43) Veröffentlichungstag der Anmeldung: 19.07.2006
(73) Patentinhaber: Frima SA, 68271 Wittenheim Cedex (FR); Rational AG, 86899 Landsberg a. Lech (DE)
(72) Erfinder: Wagner, Stefan, 68127 Oberhergheim (FR); Michineau, Serge, 68190 Ensheim (FR); Wiedemann, Peter, 86836 Klosterlechfeld (DE)
(74) Vertreter: Weber-Bruls, Dorothée

(56) Entgegenhaltungen:
- EP-A- 0 008 999
- EP-A- 1 275 334
- US-A- 4 932 550
- US-A1- 2002 139 253

## Beschreibung

Die Erfindung bezieht sich auf eine Anordnung aus einem Abloichraum und einem Tiegel zum baren eines Lebensmittels nach dem Oberbegriff von Anspruch 1; sowie ein Verfahren zum Betreiben der Anordnung zum Garen einer Speise.

Tiegel werden für die Zubereitung oder besser zum Garen von verschiedenen Lebensmitteln genutzt. Üblicherweise weist solch ein Tiegel einen Garraum, welcher in einem Garbehälter gebildet ist, und einen Deckel auf, mit dem der Garraum abgedeckt werden kann. Der Deckel kann zwischen einer geöffneten Stellung, in welcher der Garraum geöffnet ist, um das Lebensmittel in den Garraum einzubringen oder aus diesem zu entnehmen, und einer geschlossenen Stellung verlagert werden, in welcher der Garraum zum Garen des Lebensmittels geschlossen ist. Bekannte Tiegel verfügen üblicherweise über eine Öffnung in der Wandung des Garbehälters oder im Deckel, so daß beim Garen entstehender Dampf aus dem Garraum abgeleitet werden kann.

Der bekannte Tiegel ermöglicht ein Druckgaren des Lebensmittels. Die Nutzung des Druckgarens in dem Tiegel verbessert den Wirkungsgrad des Garprozesses, da zusätzlich zur Wärmebeaufschlagung des in dem Tiegel zuzubereitenden Lebensmittels die Wirkung einer Druckbeaufschlagung beim Garen genutzt wird. Die zum Garen des Lebensmittels in dem Tiegel aufgewendete Wärmeenergie kann so effizienter genutzt werden. Darüberhinaus wird die für den Garprozeß benötigte Zeit verkürzt.

Aus der EP 1 275 334 A2 sind ein Tiegel sowie ein Verfahren zum Betrieben desselben bekannt. Der bekannte Tiegel weist ferner einen am Deckel des Tiegels angeordneten Drucksensor zur Messung des Drucks im Garraum auf. Der Drucksensor ist mit einer Regelungseinheit verbunden, über die der Druck innerhalb des Garbehälters, bzw. innerhalb des Garraums, geregelt werden kann.

Zum Regeln des Drucks innerhalb des Garbehälters, selbst zum Erfassen von Drücken, die deutlich oberhalb der Drücke liegen, die zum Betreiben eines Garverfahrens geeignet sind, muß der Drucksensor für einen breiten Druckbereich einsetzbar sein. Über einen solchen großen Druckbereich arbeitende Drucksensoren sind äußerst empfindlich und sehr kostspielig.

Eine gattungsgemäße Anordnung sowie ein Verfahren zum Betreiben derselben sind aus der US 2002/0139253 A1 bekannt.

Aus der EP 0 008 999 A1 ist ein Ventil für einen Dampfkochtopf bekannt, das einen Regeldrucksensor, mit dem Drücke bis zu einem Schwellendruck erfaßbar sind, und einen Sicherheitsdrucksensor, mit dem Drücke oberhalb des Schwellendrucks erfaßbar sind, aufweist.

Aufgabe der Erfindung ist es daher, die gattungsgemäß Anordnung derart weiterzuentwickeln, daß sie die Nachteile des Stands der Technik überwindet.

Diese Aufgabe wird erfindungsgemäß durch die kennzeichnenden Merkmale von Anspruch 1 gelöst.

Bevorzugte Ausführungsformen der erfindungsgemäßen Anordnung sind in den Ansprüchen 2 bis 20 beschrieben.

Aufgabe der Erfindung ist es auch, das gattungsgemäße Verfahren derart weiterzuentwickeln, daß die Nachteile des Stands der Technik überwunden werden.

Diese Aufgabe wird mit den Merkmalen von Anspruch 21 gelöst.

Bevorzugte erfindungsgemäße Verfahren sind in den Ansprüchen 22 bis 27 beschrieben.

Der Erfindung liegt die Erkenntnis zu Grunde, daß zwei unterschiedliche Drucksensoren in einem Tiegel vorzusehen sind, nämlich zum Einen einen Regeldrucksensor, der Drücke vorzugsweise von 0 bis 200 mbar erfassen kann, sowie einen Sicherheitsdrucksensor, der Drücke oberhalb von vorzugsweise 200 mbar erfassen kann. Aufgrund des jeweils engen Meßbereichs der zwei Drucksensoren sind diese kostengünstiger als ein einziger Drucksensor, der einen Druckbereich von 0 bis deutlich über 200 mbar erfassen können muß. Ferner ermöglicht der Einsatz zweier unterschiedlicher Drucksensoren die getrennte Anordnung derselben, so daß jeder Sensor in einem ausgewählten Bereich des Tiegels gezielt angeordnet werden kann. Der Regeldrucksensor wird in einem mehr oder weniger geschützten Bereich innerhalb einer Verbindungsleitung angeordnet, die einen Garraum mit einem Ablöschrauni verbindet, während der Sicherheitssensor unmittelbar im Garraum, bevorzugt am Dekkel des Tiegels zum Verschließen des Garraums, angeordnet sein kann, um überhöhte Drücke von oberhalb 200 mbar schnell und problemlos erfassen zu können.

Vorteilhafterweise ermöglicht eine Druckregeleinrichtung in der Verbindungsleitung, die den Garraum und den Ablöschraum verbindet und bevorzugt eine Überdruckleitung ist, daß Wasserdampf, welcher über die Druckregeleinrichtung zum Druckabbau aus dem Garraum abgeführt wird, in den Ablöschraum, der Teil eines Kondensatorbehälters ist, überführt wird und dort auskondensiert. Hierbei entstehendes Wasser kann dann wiederverwendet werden.

Ist an den Ablöschraum des Kondensatorbehälters eine Druckabbaueinrichtung angeschlossen, so kann zudem verhindert werden, daß sich aufgrund einer Druckentlüftung aus dem Garraum in den Ablöschraum über die Druckregeleinrichtung ein nicht gewünschter Überdruck in dem Ablöschraum aufbaut. Solch eine Druckabbaueinrichtung umfaßt beispielsweise eine Düse zum Einspritzen von Wasser in den Ablöschraum.

Mit Hilfe einer Steuer- oder Regeleinrichtung können die Druckregeleinrichtung und die Druckabbaueinrichtung jeweils so gesteuert werden, daß im Garraum für die Zubereitung des Lebensmittels optimierte Druckbedingungen eingestellt werden. Mit Hilfe des Zuführens von Wasser in den Garraum und hieraus beim Erhitzen entstehendem Wasserdampf kann eine zusätzliche Beeinflussung des Drucks im Garraum erfolgen.

Ist an den Garraum ein Reinigungskreislauf zum Reinigen des Garraums gemäß der Erfindung angeschlossen, der eine Speiseleitung zum Einbringen einer ersten Reinigungsflüssigkeit in den Garraum und einen mit dem Garraum in Verbindung stehenden Ablauf zum Abführen einer zweiten Reinigungsflüssigkeit aus dem Garraum aufweist und den Ablöschraum umfaßt, wird das aufgrund einer Kondensation von Wasserdampf, der aus dem Garraum wegen Überdruck abgeleitet werden ist, in dem Ablöschraum entstehende Wasser für die Reinigung des Garraums verwendbar. Die Nutzung dieses Reinigungskreislaufes verbessert die Energiebilanz bei der Nutzung des erfindungsgemäßen Tiegels. Wasser wird insgesamt effizienter genutzt, was die Umweltbelastung vermindert. Im Falle der Zirkulation einer Reinigungsflotte entspricht die zweite Reinigungsflüssigkeit im Wesentlichen der ersten Reinigungsflüssigkeit.

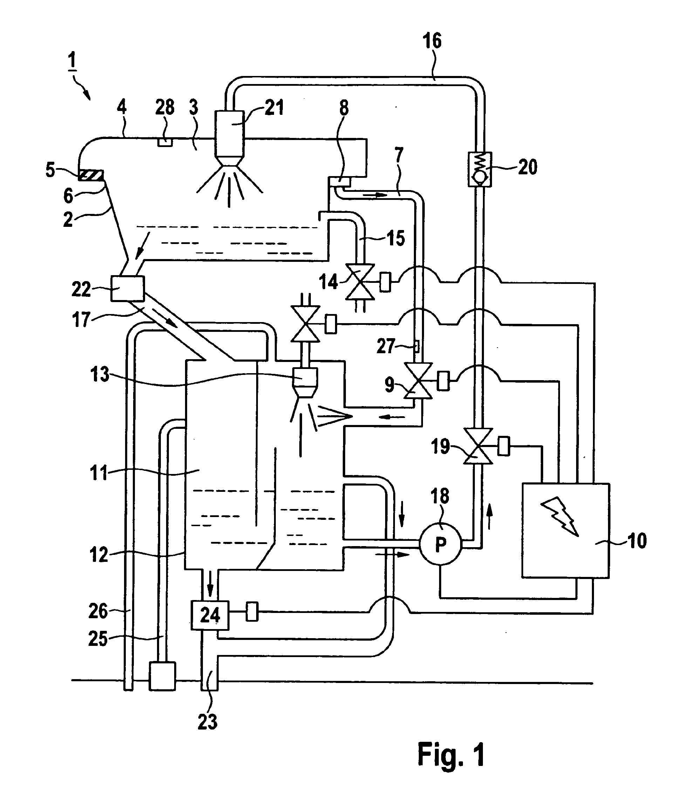

Weitere Merkmale und Vorteile der Erfindung ergeben sich aus der nachfolgenden Beschreibung, in der ein Ausführungsbeispiel der Erfindung anhand einer aus einer einzigen Figur bestehenden schematischen Zeichnung erläutert ist.

Gemäß der Figur umfaßt ein Tiegel 1 nach der Erfindung einen Garbehälter 2, in welchem ein Garraum 3 gebildet ist, sowie einen Deckel 4 zum Öffnen/Verschließen des Garraums 3. Um den Garraum 3 mit Hilfe des Deckels 4 zum Einbringen/Herausnehmen eines zu garenden Lebensmittels zu öffnen/zu schließen, ist der Deckel 4 verlagerbar insbesondere verschwenkbar ausgeführt, so daß der Deckel 4 zwischen einer geöffneten Stellung, in welcher der Garraum 3 nach oben offen ist, und einer geschlossenen Stellung, in welcher der Deckel 4 den Garraum 3 abdeckt, wie dies in der Figur gezeigt ist, verlagert werden kann. Zu diesem Zweck kann der Deckel 4 schwenkbar an dem Garbehälter 2 montiert sein. In der in der Figur dargestellten, geschlossenen Stellung des Deckels 4 wird der Garraum 3 überdruckdicht verschlossen. Die Druckdichtheit wird hierbei insbesondere mit Hilfe einer Dichtung 5 erreicht, die in der geschlossenen Stellung des Deckels 4 in einem Bereich zwischen einem oberen Rand 6 des Garbehälters 2 und dem Deckel 4 angeordnet ist. Bei der Dichtung 5 kann es sich beispielsweise um eine Gummidichtung handeln, die an dem Garbehälter 2 oder dem Deckel 4 gehalten wird. Der mit Hilfe des Deckels 4 in der geschlossenen Stellung überdruckdicht abgeschlossene Garraum 3 ermöglicht ein Druckgaren eines in dem Garraum 3 eingebrachten Lebensmittels (nicht dargestellt) während des Garprozesses.

Um Druck in dem Garraum 3 während des Druckgarens aufbauen und einstellen zu können, ist eine Verbindungsleitung 7 mit einer Öffnung 8 in der Dichtung 5 verbunden, so daß Überdruckdampf aus dem Garraum 3 durch die Verbindungsleitung 7 zu einem Magnetventil 9 für den Dampfabbau gelangen kann. In der Verbindungsleitung 7 ist ferner ein Regeldrucksensor 27 angeordnet, mit dem Drücke in einem Bereich von 0 bis etwa 200 mbar erfassbar sind. Die Anordnung des Regeldrucksensors 27 in der Verbindungsleitung 7 schützt den Regeldrucksensor 27 vor einer Beschädigung durch direkte Einflüsse im Garraum 3 aufgrund eines Garverfahrens, beispielsweise in Form einer Kontamination des Regeldrucksensors 27 durch zu garende Lebensmittel oder aus diesen austretende Substanzen, wie Fett oder dergleichen. Im Gegensatz zu der geschützten Lage des Regeldrucksensors 27 ist ein Sicherheitsdrucksensor 28 am Deckel 4 angeordnet, um Drücke oberhalb von etwa 200 mbar schnell und unmittelbar erfassen zu können. Zwar weist der Sicherheitsdrucksensor 28 eine ungeschützte Anordnung auf, da er jedoch im Vergleich zu einem Regeldrucksensor 27 verhältnismäßig kostengünstig ist, muß bei einer eventuellen Beschädigung desselben lediglich ein Sicherheitsdrucksensor 28 ersetzt werden. Der Regeldrucksensor 27 und der Sicherheitsdrucksensor 28 sind an eine elektronische Regeleinrichtung 10 angeschlossen. Daher kann über den Sicherheitsdrucksensor 28 z.B. eine Expansion von Garatmosphäre in einen Ablöschraum 11 über die Verbindungsleitung 7 bewirkt werden, wenn ein Druck oberhalb von 200 mbar vom Sicherheitsdrucksensor 28 detektiert wird.

Auch das Magnetventil 9 wird mit Hilfe der elektronischen Regeleinrichtung 10 angesteuert, um Überdruckdampf über die Verbindungsleitung 7 in den Ablöschraum 11 abzuleiten, der in einem Kondensatorkasten 12 bereitgestellt ist. In dem Ablöschraum 11 kondensiert der über die Verbindungsleitung 7 eingeleitete Wasserdampf durch Expansion zu Wasser. Um den Aufbau eines nicht gewünschten Überdrucks in dem Ablöschraum 11 gezielt zu verhindern, ist an den Ablöschraum 11 zudem eine Druckabbaueinrichtung 13 angeschlossen, bei der es sich insbesondere um eine Düse zum Einspritzen von Wasser zum Dampfabbau handeln kann.

Die Druckabbaueinrichtung 13 ist ebenfalls an die elektronische Regeleinrichtung 10 angekoppelt. Mit Hilfe der Regeleinrichtung 10 können auf diese Weise in dem Garraum 3 und dem Ablöschraum 11 die jeweiligen Druckbedingungen eingestellt werden, die einen optimalen Garprozeß gewährleisten. Zu diesem Zweck ist die Regeleinrichtung 10 weiterhin mit einer Wasserzuführeinrichtung 14, umfassend ein Ventil in einer Wasserzuführleitung 15, gekoppelt. Über die Wasserzuführleitung 15 kann Wasser in den Garraum 3 eingebracht werden, welches im erhitzten Garraum 3 wenigstens teilweise verdampft und zum Druckaufbau in dem Garraum 3 beiträgt.

Der Garraum 3 ist des Weiteren in einen Reinigungskreislauf integriert, welcher eine Speiseleitung 16 und eine Ablaufleitung 17 umfaßt. Die Speiseleitung 16 verbindet den Ablöschraum 11 mit dem Garraum 3, wobei sich in der Speiseleitung 16 eine Pumpe 18, eine Ventileinrichtung 19 sowie ein Rückschlagventil 20 befinden. Mit Hilfe der Pumpe 18 wird Reinigungsflüssigkeit, insbesondere Wasser, aus dem Ablöschraum 11 über die Speiseleitung 16 in den Garraum 3 gefördert. Hierbei durchströmt die Reinigungsflüssigkeit die Ventileinrichtung 19, welche mit der Regeleinrichtung 10 verbunden ist, und das Rückschlagventil 20 sowie eine Düse 21, über die die Reinigungsflüssigkeit in den Garraum 3 eingebracht wird. Nachdem mit Hilfe der eingespritzten Reinigungsflüssigkeit der Garraum 3 gereinigt wurde, gelangt verbrauchte Reinigungsflüssigkeit, welche Rückstände des Garprozesses umfaßt, durch die Ablaufleitung 17 über ein Ablaufventil 22 zurück in den Ablöschraum 11. Beim Reinigen aus dem Garraum 3 in den Ablöschraum 11 gelangende Schmutzpartikel können aus dem Ablöschraum 11 über einen Ausgang 23 abgeleitet werden. Zum Öffnen/Schließen des Ausgangs 23 ist Ventil 24 vorgesehen, welches ebenfalls an die elektronische Regeleinrichtung 10 gekoppelt ist. Mit Hilfe des Reinigungskreislaufes und der Anbindung der Verbindungsleitung 7 an den Ablöschraum 11 ist es möglich, Wasser, was beispielsweise infolge der Kondensation von Überdruckdampf aus dem Garraum 3 in dem Ablöschraum 11 gebildet wird, zur Reinigung des Garraums 3 zu nutzen.

Der Kondensatorkasten 12 verfügt gemäß der Figur weiterhin über einen Überlauf 25 sowie eine Belüftung 26, die jeweils auch mit dem Ablöschraum 11 in Verbindung stehen.

Bei der in der Figur dargestellten Anordnung mit dem Tiegel 1 ist es möglich, die Bedingungen für das Druckgaren in dem Garraum 3 mit Hilfe der elektronischen Regeleinrichtung 10 umfassend und den komplexen Wirkbeziehungen zwischen den Elementen der Anordnung entsprechend zu regulieren. Die effiziente Nutzung der zum Garen eingeleiteten Energie wird insbesondere mit Hilfe des Druckgarens und der vorgesehenen Messung und Regelung der Druckbedingungen unterstützt.

### Bezugszeichenliste

- 1: Tiegel
- 2: Garbehälter
- 3: Garraum
- 4: Deckel
- 5: Dichtung
- 6: Oberer Rand
- 7: Verbindungsleitung
- 8: Öffnung
- 9: Magnetventil
- 10: Regeleinrichtung
- 11: Ablöschraum
- 12: Kondensatorkasten
- 13: Druckabbaueinrichtung
- 14: Wasserzuführeinrichtung
- 15: Wasserzuführleitung
- 16: Speiseleitung
- 17: Ablaufleitung
- 18: Pumpe
- 19: Ventileinrichtung
- 20: Rückschlagventil
- 21: Düse
- 22: Ablaufventil
- 23: Ausgang
- 24: Ventil
- 25: Überlauf
- 26: Belüftung
- 27: Regeldrucksensor
- 28: Sicherheitsdrucksensor

## Patentansprüche

1. Anordnung aus einem Ablöschraum (11) und einem Tiegel (1) zum Garen eines Lebensmittels, wobei der Tiegel (1) ausgestattet ist mit : einem Garraum (3), welcher in einem Garbehälter (2) bereitgestellt ist, einem Deckel (4), der zwischen einer geöffneten Stellung, in welcher der Garraum (3) geöffnet ist, und einer geschlossenen Stellung, in welcher der Garraum (3) geschlossen ist, verlagerbar ist, einem Dichtmittel (5) zum überdruckdichten Schließen des Garraums (3), wenn der Deckel (4) in der geschlossenen Stellung ist, so daß in dem Garraum (3) ein Druckgaren des Lebensmittels ausführbar ist, einem Regeldrucksensor (27), mit dem Drücke bis zu einem Schwellendruck erfaßbar sind, einem Sicherheitsdrucksensor (28), mit dem Drücke oberhalb besagten Schwellendrucks erfaßbar sind, und zumindest einer Öffnung (8) zum Bereitstellen einer Verbindung zwischen dem Garraum (3) und dem Ablöschraum (11), insbesondere für einen Dampfabzug, über eine Verbindungsleitung (7), **dadurch gekennzeichnet, daß** der Regeldrucksensor (27) in der Verbindungsleitung (7) zwischen dem Garraum (3) und dem Ablöschraum (11) angeordnet ist, insbesondere in den Ablöschraum (11) mündet.

2. Anordnung nach Anspruch 1, **dadurch gekennzeichnet, daß** der Sicherheitsdrucksensor (28) getrennt vom Regeldrucksensor (27), bevorzugt innerhalb des Garraums (3), noch bevorzugter am Deckel (4), angeordnet ist.

3. Anordnung nach Anspruch 1 oder 2, **dadurch gekennzeichnet, daß** der Sicherheitsdrucksensor (28) einen Druckschalter umfaßt.

4. Anordnung nach einem der vorangehenden Ansprüche, **dadurch gekennzeichnet, daß** der Schwellendruck zwischen 150 und 250 mbar, vorzugsweise bei 200 mbar, liegt.

5. Anordnung nach einem der vorangehenden Ansprüche, **dadurch gekennzeichnet, daß** die Dichtmittel zumindest eine Dichtung (5) umfassen, die in der geschlossenen Stellung des Deckels (4) in einem Bereich zwischen einem oberen Rand (6) des Garbehälters (2) und dem Deckel (4) angeordnet ist.

6. Anordnung nach Anspruch 5, **dadurch gekennzeichnet, daß** die Öffnung (8) durch die Dichtung (5) hindurchtritt.

7. Anordnung nach einem der vorangehenden Ansprüche, **gekennzeichnet durch** eine Druckregeleinrichtung (9) zum Regeln des Überdrucks in dem Garraum (3), die vorzugsweise über die Öffnung (8) mit dem Garraum (3) in Verbindung steht.

8. Anordnung nach Anspruch 7, **dadurch gekennzeichnet, daß** die Druckregeleinrichtung (9) ein Magnetventil zum Dampfdruckabbau in dem Garraum (3) umfasst.

9. Anordnung nach Anspruch 7 oder 8, **dadurch gekennzeichnet, daß** die Druckregeleinrichtung (9) in der Verbindungsleitung (7) angeordnet ist, die den Garraum (3) und den Ablöschraum (11) verbindet.

10. Anordnung nach einem der vorangehenden Ansprüche, **dadurch gekennzeichnet, daß** die Verbindungsleitung (7) eine Überdruckleitung umfaßt.

11. Anordnung nach einem der vorangehenden Ansprüche, **dadurch gekennzeichnet, daß** der Ablöschraum (11) von einem Kondensatorbehälter (12) umfaßt ist.

12. Anordnung nach einem der vorangehenden Ansprüche, **dadurch gekennzeichnet, daß** an den Ablöschraum (11) eine Druckabbaueinrichtung (13) angeschlossen ist, die vorzugsweise zumindest eine Düse zum Zuführen von Wasser in den Ablöschraum (11) umfaßt.

13. Anordnung nach einem der Ansprüche 7 bis 12, **dadurch gekennzeichnet, daß** die Druckregeleinrichtung (9) und/oder die Druckabbaueinrichtung (13) zur Regelung von Druckbedingungen in dem Garraum (3) und/oder dem Ablöschraum (11) mit dem Regeldrucksensor (27) und/oder dem Sicherheitsdrucksensor (28) in Wirkverbindung stehen.

14. Anordnung nach einem der vorangehenden Ansprüche, **gekennzeichnet durch** eine, insbesondere elektronische, Steuer- oder Regeleinrichtung (10), die mit dem Regeldrucksensor (27), dem Sicherheitsdrucksensor (28), der Druckregeleinrichtung (9) und/oder der Druckabbaueinrichtung (13) zur Regelung von Druckbedingungen in dem Garraum (3) und/oder dem Ablöschraum (11) in Wirkverbindung steht.

15. Anordnung nach Anspruch 14, **dadurch gekennzeichnet, daß** die Steuer- oder Regeleinrichtung (10) an eine Wasserzuführeinrichtung (14, 15) zum Einführen von Wasser in den Garraum (3) gekoppelt ist.

16. Anordnung nach einem der vorangehenden Ansprüche, **gekennzeichnet durch** einen an den Garraum (3) angeschlossenen Reinigungskreislauf zum Reiniguen des Garraums (3), wobei der Reinigungskreislauf vorzugsweise eine Speiseleitung (16) zum Einbringen einer ersten Reinigungsflüssigkeit in dem Garraum (3) und einen mit dem Garraum (3) in Verbindung stehenden Ablauf (17) zum Abführen einer zweiten Reinigungsflüssigkeit aus dem Garraum (3) aufweist.

17. Anordnung nach Anspruch 16, **dadurch gekennzeichnet, daß** der Ablöschraum (11) als Bestandteil des Reinigungskreislaufes an die Speiseleitung (16) und den Ablauf (17) gekoppelt ist.

18. Anordnung nach Anspruch 17, **gekennzeichnet durch** eine Pumpeneinrichtung (18) zum Fördern der ersten und/oder zweiten Reinigungsflüssigkeit aus dem Ablöschraum (11) über die Speiseleitung (16) in den Garraum (3).

19. Anordnung nach einem der Ansprüche 16 bis 18, **gekennzeichnet durch** ein in der Speiseleitung (16) angeordnetes Rückschlagventil (20).

20. Anordnung nach einem der vorangehenden Ansprüche, **dadurch gekennzeichnet, daß** der Anordnung kippbar oder verschwenkbar ist.

21. Verfahren zum Garen eines Lebensmittels mit Hilfe einer Anordnung aus einem Ablöschraum (11) und einem Tiegel (1) nach einem der vorangehenden Ansprüche, wobei der Tiegel (1) einen in einem Garbehälter (2) gebildeten Garraum (3) und einen Deckel (4) aufweist, wobei der Deckel (4) zwischen einer geöffneten Stellung, in welcher der Garraum (3) geöffnet ist, und einer geschlossenen Stellung, in welcher der Garraum (3) geschlossen ist, verlagert werden kann, so daß der Garraum (3)in der geschlossenen Stellung des Deckels (4) mit Hilfe von Dichtmitteln (5) überdruckdicht verschlossen und das Lebensmittel in dem Garraum (3) mittels Druckgaren gegart werden kann, wobei Drücke bis zu einem Schwellendruck von einem Regeldrucksensor (27) und ab besagtem Schwellendruck von einem Sicherheitsdrucksensor (28) erfaßt werden.

22. Verfahren nach Anspruch 21, **dadurch gekennzeichnet, daß** Druckbedingungen in dem Garraum (3) beim Druckgaren mit Hilfe einer Druckregeleinrichtung (9) geregelt werden.

23. Verfahren nach Anspruch 22, **dadurch gekennzeichnet, daß** Überdruck im Garraum (3) mit Hilfe der Druckregeleinrichtung (9) über eine Verbindungsleitung (7) aus dem Garraum (3) in einen Ablöschraum (11) abgeleitet wird.

24. Verfahren nach Anspruch 23, **dadurch gekennzeichnet, daß** Überdruck in dem Ablöschraum (11) mit Hilfe einer Druckabbaueinrichtung (13) abgebaut wird.

25. Verfahren nach Anspruch 22 oder 23, **dadurch gekennzeichnet, daß** bei Drücken oberhalb des Schwellendrucks, der vorzugsweise etwa 200 mbar beträgt, im Garraum (3) eine Expansion von Garatmosphäre in den Ablöschraum (11) bewirkt wird, wobei im Ablöschraum (11) dann insbesondere eine Auskondensierung bewirkt wird.

26. Verfahren nach einem der Ansprüche 21 bis 25, **dadurch gekennzeichnet, daß** in einem Reinigungskreislauf eine erste Reinigungsflüssigkeit aus dem Ablöschraum (11) in den Garraum (3) gefördert und eine zweite Reinigungsflüssigkeit aus dem Garraum (3) über einen Ablauf (17) in den Abschlöschraum (11) abgeleitet wird.

27. Verfahren nach einem der Ansprüche 21 bis 26, **dadurch gekennzeichnet, daß** Druckbedingungen in dem Garraum (3) und/oder dem Ablöschraum (11) mit Hilfe einer Steuer- oder Regeleinrichtung (10) eingestellt werden, wobei die Steuer- oder Regeleinrichtung (10) vorzugsweise mit dem Regeldrucksensor (27), dem Sicherheitsdrucksensor (28), der Druckregeleinrichtung (9) und der Druckabbaueinrichtung (13) zusammenwirkt.

## Claims

1. Arrangement made up of a quenching space (11) and a pot (1) for cooking food, the pot (1) being equipped with a cooking space (3), which is provided in a cooking vessel (2), with a lid (4), which can be displaced between an open position, in which the cooking space (3) is open, and a closed position, in which the cooking space (3) is closed, with a sealing means (5) for closing the cooking space (3) in an overpressure-tight manner when the lid (4) is in the closed position, so that it is possible to pressure cook the food in the cooking space (3), with a pressure-regulating sensor (27), which can sense pressures up to a threshold pressure, with a safety-pressure sensor (28), which can sense pressures above said threshold pressure, and with at least one opening (8) for providing a connection between the cooking space (3) and the quenching space (11), in particular for drawing off steam via a connecting line (7), **characterized in that** the pressure-regulating sensor (27) is arranged in the connecting line (7) between the cooking space (3) and the quenching space (11), in particular opens out into the quenching space (11).

2. Arrangement according to Claim 1, **characterized in that** the safety-pressure sensor (28) is arranged separately from the pressure-regulating sensor (27), preferably within the cooking space (3), and more preferably on the lid (4).

3. Arrangement according to Claim 1 or 2, **characterized in that** the safety-pressure sensor (28) comprises a pressure switch.

4. Arrangement according to one of the preceding claims, **characterized in that** the threshold pressure is between 150 and 250 mbar, preferably around 200 mbar.

5. Arrangement according to one of the preceding claims, **characterized in that** the sealing means comprise at least one seal (5) which, in the closed position of the lid (4), is arranged in a region between a top periphery (6) of the cooking vessel (2) and the lid (4).

6. Arrangement according to Claim 5, **characterized in that** the opening (8) passes through the seal (5).

7. Arrangement according to one of the preceding claims, **characterized by** a pressure-regulating device (9) for regulating the overpressure in the cooking space (3), the device preferably being connected to the cooking space (3) via the opening (8).

8. Arrangement according to Claim 7, **characterized in that** the pressure-regulating device (9) comprises a solenoid valve for dissipating steam pressure in the cooking space (3).

9. Arrangement according to Claim 7 or 8, **characterized in that** the pressure-regulating device (9) is arranged in the connecting line (7), which connects the cooking space (3) and the quenching space (11).

10. Arrangement according to one of the preceding claims, **characterized in that** the connecting line (7) comprises an overpressure line.

11. Arrangement according to one of the preceding claims, **characterized in that** the quenching space (11) is enclosed by a condenser vessel (12).

12. Arrangement according to one of the preceding claims, **characterized in that** the quenching space (11) is adjoined by a pressure-dissipating device (13), which preferably comprises at least one nozzle for feeding water into the quenching space (11).

13. Arrangement according to one of Claims 7 to 12, **characterized in that** the pressure-regulating device (9) and/or the pressure-dissipating device (13) are operatively connected to the pressure-regulating sensor (27) and/or the safety-pressure sensor (28) for the purpose of regulating pressure conditions in the cooking space (3) and/or the quenching space (11).

14. Arrangement according to one of the preceding claims, **characterized by** an in particular electronic control or regulating device (10) which is operatively connected to the pressure-regulating sensor (27), the safety-pressure sensor (28), the pressure-regulating device (9) and/or the pressure-dissipating device (13) for the purpose of regulating pressure conditions in the cooking space (3) and/or the quenching space (11).

15. Arrangement according to Claim 14, **characterized in that** the control or regulating device (10) is coupled to a water-feed device (14, 15) for introducing water into the cooking space (3).

16. Arrangement according to one of the preceding claims, **characterized by** a cleaning circuit which is connected to the cooking space (3) and is intended for cleaning the cooking space (3), the cleaning circuit preferably having a supply line (16), for introducing a first cleaning liquid into the cooking space (3), and an outlet (17), which is connected to the cooking space (3) and is intended for channelling away a second cleaning liquid out of the cooking space (3).

17. Arrangement according to Claim 16, **characterized in that** the quenching space (11), as a constituent part of the cleaning circuit, is coupled to the supply line (16) and the outlet (17).

18. Arrangement according to Claim 17, **characterized by** a pump device (18) for delivering the first and/or second cleaning liquid from the quenching space (11), via the supply line (16), into the cooking space (3).

19. Arrangement according to one of Claims 16 to 18, **characterized by** a non-return valve (20) arranged in the supply line (16).

20. Arrangement according to one of the preceding claims, **characterized in that** the arrangement can be tilted or pivoted.

21. Method of cooking food with the aid of an arrangement made up of a quenching space (11) and a pot (1) according to one of the preceding claims, in which case the pot (1) has a cooking space (3), which is formed in a cooking vessel (2), and a lid (4), it being possible for the lid (4) to be displaced between an open position, in which the cooking space (3) is open, and a closed position, in which the cooking space (3) is closed, so that, in the closed position of the lid (4), the cooking space (3) can be closed in an overpressure-tight manner with the aid of sealing means (5) and the food in the cooking space (3) can be pressure-cooked, a pressure-regulating sensor (27) sensing pressures up to a threshold pressure and a safety-pressure sensor (28) sensing pressures above said threshold pressure.

22. Method according to Claim 21, **characterized in that** pressure conditions in the cooking space (3) during pressure cooking are regulated with the aid of a pressure-regulating device (9).

23. Method according to Claim 22, **characterized in that** overpressure in the cooking space (3) is directed out of the cooking space (3) into a quenching space (11), via a connecting line (7), with the aid of the pressure-regulating device (9).

24. Method according to Claim 23, **characterized in that** overpressure in the quenching space (11) is dissipated with the aid of a pressure-dissipating device (13).

25. Method according to Claim 22 or 23, **characterized in that**, in the case of pressures above the threshold pressure, which is preferably approximately 200 mbar, in the cooking space (3), cooking atmosphere is caused to expand into the quenching space (11), this then resulting, in particular, in a condensing-out effect in the quenching space (11).

26. Method according to one of Claims 21 to 25, **characterized in that**, in a cleaning circuit, a first cleaning liquid is delivered from the quenching space (11) into the cooking space (3) and a second cleaning liquid is directed out of the cooking space (3), via an outlet (17), into the quenching space (11).

27. Method according to one of Claims 21 to 26, **characterized in that** pressure conditions in the cooking space (3) and/or the quenching space (11) are set with the aid of a control or regulating device (10), the control or regulating device (10) preferably interacting with the pressure-regulating sensor (27), the safety-pressure sensor (28), the pressure-regulating device (9) and the pressure-dissipating device (13).

## Revendications

1. Ensemble constitué d'un compartiment de trempe (11) et d'un poêlon (1) pour la cuisson d'un produit alimentaire, dans lequel le poêlon est équipé de :
un compartiment de cuisson (3) qui est mis à disposition dans un récipient de cuisson (2) ;
un couvercle (4) qui peut être déporté entre une position ouverte dans laquelle le compartiment de cuisson (3) est ouvert et une position fermée dans laquelle le compartiment de cuisson (3) est fermé ;
un moyen d'étanchement (5) pour la fermeture étanche à la surpression du compartiment de cuisson (3) lorsque le couvercle (4) est dans la position fermée, de sorte qu'il est possible d'exécuter une cuisson sous pression du produit alimentaire dans le compartiment de cuisson (3) ;
un capteur de pression de régulation (27) permettant de saisir des pressions jusqu'à une pression de seuil ;
un capteur de pression de sécurité (28) permettant de saisir des pressions supérieures à ladite pression de seuil ; et
au moins une ouverture (8) pour la mise à disposition d'une liaison entre le compartiment de cuisson (3) et le compartiment de trempe (11), en particulier pour une hotte aspirante, par l'intermédiaire d'une conduite de liaison (7),
**caractérisé en ce que** le capteur de pression de régulation (27) est agencé dans la conduite de liaison (7), entre le compartiment de cuisson (3) et le compartiment de trempe (11), laquelle s'embouche en particulier dans le compartiment de trempe (11).

2. Ensemble selon la revendication 1, **caractérisé en ce que** le capteur de pression de sécurité (28) est agencé séparément du capteur de pression de régulation (27), de préférence à l'intérieur du compartiment de cuisson (3), de manière encore plus préférentielle sur le couvercle (4).

3. Ensemble selon l'une ou l'autre des revendications 1 et 2, **caractérisé en ce que** le capteur de pression de sécurité (28) comporte un interrupteur manométrique.

4. Ensemble selon l'une des revendications précédentes, **caractérisé en ce que** la pression de seuil est entre 150 et 250 mbar, de préférence aux alentours de 200 mbar.

5. Ensemble selon l'une des revendications précédentes, **caractérisé en ce que** les moyens d'étanchement comportent au moins un joint (5) qui, dans la position fermée du couvercle (4), est agencé dans une zone entre un bord supérieur (6) du récipient de cuisson (2) et le couvercle (4).

6. Ensemble selon la revendication 5, **caractérisé en ce que** l'ouverture (8) traverse le joint (5).

7. Ensemble selon l'une des revendications précédentes, **caractérisé par** un dispositif de régulation de pression (9) pour réguler la surpression dans le compartiment de cuisson (3), lequel est de préférence en liaison avec le compartiment de cuisson (3) par l'intermédiaire de l'ouverture (8).

8. Ensemble selon la revendication 7, **caractérisé en ce que** le dispositif de régulation de pression (9) comporte une soupape magnétique pour réduire la pression de vapeur dans le compartiment de cuisson (3).

9. Ensemble selon l'une ou l'autre des revendications 7 et 8, **caractérisé en ce que** le dispositif de régulation de pression (9) est agencé dans la conduite de liaison (7) qui relie le compartiment de cuisson (3) et le compartiment de trempe (11).

10. Ensemble selon l'une des revendications précédentes, **caractérisé en ce que** la conduite de liaison (7) comporte une conduite de surpression.

11. Ensemble selon l'une des revendications précédentes, **caractérisé en ce que** le compartiment de trempe (11) est entouré par un réservoir à condensateur (12).

12. Ensemble selon l'une des revendications précédentes, **caractérisé en ce qu'**un dispositif de réduction de pression (13) est raccordé au compartiment de trempe (11), ledit dispositif comportant de préférence au moins une buse pour amener de l'eau jusque dans le compartiment de trempe (11).

13. Ensemble selon l'une des revendications 7 à 12, **caractérisé en ce que** le dispositif de régulation de pression (9) et/ou le dispositif de réduction de pression (13) est/sont en liaison efficace avec le capteur de pression de régulation (27) et/ou le capteur de pression de sécurité (28) afin de réguler les conditions de pression dans le compartiment de cuisson (3) et/ou dans le compartiment de trempe (11).

14. Ensemble selon l'une des revendications précédentes, **caractérisé par** un dispositif de commande ou de régulation (10), en particulier électronique, qui est en liaison efficace avec le capteur de pression de régulation (27), le capteur de pression de sécurité (28), le dispositif de régulation de pression (9) et/ou le dispositif de réduction de pression (13) afin de réguler les conditions de pression dans le compartiment de cuisson (3) et/ou dans le compartiment de trempe (11).

15. Ensemble selon la revendication 14, **caractérisé en ce que** le dispositif de commande ou de régulation (10) est accouplé à un dispositif d'amenée d'eau (14, 15) pour introduire de l'eau dans le compartiment de cuisson (3).

16. Ensemble selon l'une des revendications précédentes, **caractérisé par** un circuit de nettoyage raccordé au compartiment de cuisson (3) pour nettoyer le compartiment de cuisson (3), le circuit de nettoyage présentant de préférence une conduite d'alimentation (16) pour l'apport d'un premier liquide de nettoyage dans le compartiment de cuisson (3) et un écoulement (17) se trouvant en liaison avec le compartiment de cuisson (3) pour évacuer un second liquide de nettoyage en dehors du compartiment de cuisson (3).

17. Ensemble selon la revendication 16, **caractérisé en ce que** le compartiment de trempe (11) est accouplé à la conduite d'alimentation (16) et à l'écoulement (17), comme partie intégrante du circuit de nettoyage.

18. Ensemble selon la revendication 17, **caractérisé par** un dispositif de pompage (18) pour convoyer le premier et/ou le second liquide de nettoyage en dehors du compartiment de trempe (11) jusque dans le compartiment de cuisson (3) par l'intermédiaire de la conduite d'alimentation (16).

19. Ensemble selon l'une des revendications 16 à 18, **caractérisé par** un clapet antiretour (20) agencé dans la conduite d'alimentation (16).

20. Ensemble selon l'une des revendications précédentes, **caractérisé en ce que** l'ensemble peut être basculé ou pivoté.

21. Procédé pour la cuisson d'un produit alimentaire à l'aide d'un ensemble constitué d'un compartiment de trempe (11) et d'un poêlon (1) selon l'une des revendications précédentes, dans lequel le poêlon (1) présente un compartiment de cuisson (3) formé dans un récipient de cuisson (2) et un couvercle (4), le couvercle (4) pouvant être déporté entre une position ouverte dans laquelle le compartiment de cuisson (3) est ouvert et une position fermée dans laquelle le compartiment de cuisson (3) est fermé, de sorte que le compartiment de cuisson (3) est fermé avec étanchéité à la surpression dans la position fermée du couvercle (4) à l'aide de moyens d'étanchement (5) et de sorte que le produit alimentaire peut être cuit au moyen d'une cuisson sous pression dans le compartiment de cuisson (3), sachant que des pressions sont saisies par un capteur de pression de régulation (27) jusqu'à une pression de seuil et par un capteur de pression de sécurité (28) à partir de ladite pression de seuil.

22. Procédé selon la revendication 21, **caractérisé en ce que** des conditions de pression dans le compartiment de cuisson (3) sont régulées pendant la cuisson sous pression à l'aide du dispositif de régulation de pression (9).

23. Procédé selon la revendication 22, **caractérisé en ce que** la surpression dans le compartiment de cuisson (3) est dérivée en dehors du compartiment de cuisson (3) jusque dans un compartiment de trempe (11) à l'aide du dispositif de régulation de pression (9) par l'intermédiaire d'une conduite de liaison (7).

24. Procédé selon la revendication 23, **caractérisé en ce que** la surpression dans le compartiment de trempe (11) est diminuée à l'aide d'un dispositif de réduction de pression (13).

25. Procédé selon l'une ou l'autre des revendications 22 et 23, **caractérisé en ce que**, dans le cas de pressions supérieures à la pression de seuil qui est de préférence aux alentours de 200 mbar, une expansion de l'atmosphère de cuisson dans le compartiment de cuisson (3) est induite jusque dans le compartiment de trempe (11), une condensation étant alors induite en particulier dans le compartiment de trempe (11).

26. Procédé selon l'une des revendications 21 à 25, **caractérisé en ce que**, dans un circuit de nettoyage, un premier liquide de nettoyage est convoyé en dehors du compartiment de trempe (11) jusque dans le compartiment de cuisson (3) et un second liquide de nettoyage est dérivé en dehors du compartiment de cuisson (3) jusque dans le compartiment de trempe (11) par l'intermédiaire d'un écoulement (17).

27. Procédé selon l'une des revendications 21 à 26, **caractérisé en ce que** des conditions de pression dans le compartiment de cuisson (3) et/ou dans le compartiment de trempe (11) sont ajustées à l'aide d'un dispositif de commande ou de régulation (10), le dispositif de commande ou de régulation (10) coopérant de préférence avec le capteur de pression de régulation (27), le capteur de pression de sécurité (28), le dispositif de régulation de pression (9) et le dispositif de réduction de pression (13).
